# EUROPEAN PATENT APPLICATION

(11) **EP 3 530 822 A1**
(43) Date of publication of application: **28.08.2019**
(21) Application number: 16919042.8
(22) Date of filing: 23.12.2016
(51) Int. Cl.: E03C 1/04

(54) **DEVICE FOR QUICKLY MOUNTING AND QUICKLY DETACHING FAUCET ON COUNTERTOP**

(30) Priority: 21.10.2016 CN 201610917786; 21.10.2016 CN 201621144145 U
(71) Applicant: Xiamen Solex High-Tech Industries Co., Ltd., Xiamen, Fujian 361000 (CN)
(72) Inventor: MU, Weihai, Xiamen Fujian 361000 (CN); HONG, Chunjie, Xiamen Fujian 361000 (CN); CHEN, Wenxing, Xiamen Fujian 361000 (CN); WANG, Mingnan, Xiamen Fujian 361000 (CN)
(74) Representative: Lang, Christian
(86) International application number: PCT/CN2016/111610
(87) International publication number: WO 2018/072311

(57) **Abstract**

The invention provides a device for quickly mounting and quickly detaching a faucet on the countertop, comprising: a base, which is disposed on the upper surface of the countertop, and is provided with a hole communicated to the mounting hole of the countertop; the side wall of the hole extends a boss into the hole, and the boss has a receiving hole along the length direction of the hole; one end of the pressing rod is inserted into the receiving hole and extended into the mounting hole, and the other end of the pressing rod is exposed outside the hole; an elastic reset piece is provided between the other end of the pressing rod and the receiving hole; the end of the pressing rod extending to the mounting hole is provided with an abutting piece and a limiting piece which can rotate coaxially with the pressing rod; when the end of the pressing rod exposed to the outside of the hole is subjected to an external force, the pressing rod moves from the first position to the second position along the length direction of the hole; when the pressing rod is located in the second position, the abutting piece moves to outside the mounting hole, and the limiting piece is located in the mounting hole; the pressing rod is rotated, when the abutting piece rotates to below the lower surface of the countertop, the limiting piece abuts against the mounting hole; when the external force is withdrawn, the elastic reset piece drives the pressing rod to move up, so that the abutting piece abuts against the lower surface of the countertop.

## Description

### Technical field

The invention relates to a faucet mounting device, in particular to a device for quickly mounting and quickly detaching a faucet.

### Background technology

Existing faucets, especially those installed on kitchen sink countertops, are often equipped with a pull-out sprinkler to facilitate users to wash in the sink after pulling out, such as cleaning pots, plates, etc., instead of being able to wash only under the faucet as before. Its functions and advantages are well known to consumers, so we will not elaborate on them here.

The single handle pull-out faucet can be applied to the sink countertop with three or single mounting holes at the same time. The single handle pull-out faucet can control the effluent only through a single handle, and the operation is simpler and faster than the double handle pull-out faucet.

It should be noted that in the single-handle pull-out faucet, the bottom end of the faucet body is provided with an externally threaded seat tube, the seat tube passes through the mounting hole on the surface of the sink, and then a fiber mat is placed on the seat tube, a sheet and a metal gasket, after which a retaining ring is screwed and the bolt is locked on the retaining ring, the bolt abuts the metal gasket, and the seat tube is mounted on the sink together with the faucet body thereon, thereby installing personnel must be forced to install in a narrow space under the sink countertop, so the operation is laborious and takes a long time.

In addition, it is well known that the above-mentioned mixed water outlet pipe is usually designed with a flexible water spray hose and a valve outlet pipe, which can be connected to the pull-out nozzle and provided for a heavy hammer to be installed and positioned, and the valve outlet pipe is connected to the mixing valve and is connected with the water spray hose, thereby ensuring that the pull-out faucet can be easily pulled and retracted.

For example, US patent US4, 848, 395 reveals a mixed faucet for cleaning countertops, including a faucet housing, which can be clamped to the lower side of the cleaning countertop by a clamping means and supported on an mounting hole of the cleaning countertop. In order to improve the connection with the cleaning countertop, a sleeve with a channel for assembling the water supply pipeline is fixed and connected in the mounting hole of the cleaning countertop. Thus, the faucet housing can slide and nest on the fixed base from the cleaning countertop and be locked in a mosaic position. wherein, the clamping means include two clamping screws through two screw holes of the fixed base and a clamping lug screwed on the clamping bolts, and the above-mentioned clamping bolt is rotated from above the fixed base by the tool, so that the clamping lug is clamped upward to fix the lower side of the cleaning countertop, furthermore, the fixed base is clamped on the cleaning countertop, so that the faucet housing can be mounted and positioned by the fixed base.

However, the limiting structure is not disclosed under the fixed base to prevent the clamping lugs from rotating when the clamping bolt rotates, so that the clamping block is easy to rotate with the clamping bolt, and cannot be axially displaced up and down to perform the clamping action. Therefore, it is still necessary to fix the clamping lugs from below the cleaning countertop during operation, and it is impossible to clamp the fixed base completely by rotating from below the cleaning countertop. On the other hand, the above-mentioned two clamping lugs are also likely to be misaligned, and cannot be accurately controlled to be symmetrical with each other while fully clamping the position under the cleaning countertop, thereby affecting the clamping force and the stability.

### Summary of the invention

The main technical problem to be solved by the invention is to provide a device for quickly mounting and quickly detaching a faucet on a countertop, which is convenient to mount and detach and has low cost. And the area of the mounting hole on the countertop is relatively small, which can accommodate more water pipes to pass through.

In order to solve the technical problems mentioned above, the invention provides a device for quickly mounting and quickly detaching a faucet, comprising:
a base, which is disposed on the upper surface of the countertop, and is provided with a hole communicated to the mounting hole of the countertop;
a pressing rod, the side wall of the hole extends a boss into the hole, and the boss has a receiving hole along the length direction of the hole; one end of the pressing rod is inserted into the receiving hole and extended into the mounting hole, and the other end of the pressing rod is exposed outside the hole; an elastic reset piece is provided between the other end of the pressing rod and the receiving hole;
the end of the pressing rod extending to the mounting hole is provided with an abutting piece and a limiting piece which can rotate coaxially with the pressing rod;
when the end of the pressing rod exposed to the outside of the hole is subjected to an external force, the pressing rod moves from the first position to the second position along the length direction of the hole; when the pressing rod is located in the second position, the abutting piece moves to outside the mounting hole, and the limiting piece is located in the mounting hole; the pressing rod is rotated, when the abutting piece rotates to below the lower surface of the countertop, the limiting piece abuts against the inner wall of the mounting hole; when the external force is withdrawn, the elastic reset piece drives the pressing rod to move up, so that the abutting piece abuts against the lower surface of the countertop.

In a preferred embodiment: the pressing rod is a step bolt; it is provided with a thread section, a guide section and a limiting section, the diameter of the thread section is smaller than the diameter of the guide section, and the diameter of the guide section is smaller than the diameter of the limiting section.

In a preferred embodiment: the receiving hole is a screw hole, when the step bolt is located in the first position, the thread section is at least partially located in the screw hole, the limiting section is located outside the screw hole, and the inner diameter of the screw hole is larger than the diameter of the thread section and the guide section; when the step bolt is located in the second position, the guide section is at least partially located in the screw hole. In a preferred embodiment: after the abutting piece abuts against the lower surface of the countertop, the step bolt is rotated so that the step bolt and the screw hole are locked, and the upper surface of the base and the countertop is tightened.

In a preferred embodiment: the abutting piece includes a pressing plate and a cushion pad; the pressing plate is provided with a through hole which the thread section of the step bolt passes through the through hole and is connected with the pressing plate; the upper surface of the pressing plate is provided with a socket, and the cushion pad is provided with a corresponding plunger.

In a preferred embodiment: the limiting piece is a limiting pin extending upward on the upper surface of the pressing plate.

In a preferred embodiment: the limiting pin is arranged next to the through hole.

In a preferred embodiment: the step bolts are two, which are symmetrically arranged along the axis of the hole;one end of each step bolt is provided with the pressing plate respectively.

In a preferred embodiment: when the two step bolts are located in the first position, the pressing plates which connected to the two step bolts are in a state of stacking at different heights; the positions of the front end of the pressing plate and the cushion pad toward the limiting pin of the other pressing plate respectively are provided with a receiving groove.

In a preferred embodiment: the elastic reset piece is a spring.

Compared with the existing technology, this invention has the following beneficial effects:
1. The invention provided a device for quickly mounting and quickly detaching a faucet on the countertop, all mounting steps are completed above the countertop surface, and the mounting personnel need not operate in a narrow space below the countertop surface. The mounting process is very simple and convenient.
2. The invention provides a device for quickly mounting and quickly detaching a faucet on the countertop, the limiting pin is one-way limited along the locking direction of the step bolt. When the step bolt rotates in the direction of loosening, the limiting pin is also released, and the detaching process is very simple.
3. The invention provides a device for quickly mounting and quickly detaching a faucet on the countertop. The limiting pin is arranged on the upper surface of the pressing block, so the height of the limiting pin can be made relatively low. In addition, the device requires few components, which minimizes the occupancy of space in the mounting hole.The space in the mounting hole is enough to put down three water pipes with a diameter of 10 mm and an independent channel pipe with an outer diameter of 18 mm for the smooth passage of the drawing pipe.
4. The invention provides a device for quickly mounting and quickly detaching a faucet on the countertop, which provides an upward abutting force to the lower surface of the countertop through an elastic reset piece and a pressing plate. On the other hand, through step bolts and screw holes to exert downward force on the upper surface of the countertop, so that the base is firmly fixed at the mounting hole, it does not shift after long-term use and has high reliability.
5. The invention provides a device for quickly mounting and quickly detaching a faucet on the countertop. The step bolt is provided with a thread section, a guide section and a limiting section, and the outer diameter increases in turn. The guide section functions that since the inner diameter of the screw hole is larger than the diameter of the thread section of the bolt, the guide section prevents the deflection of the bolt and the screw hole from being excessively large when locking, which lead to thread slip, the gap between the abutting piece and the countertop cannot be pressed; the function of the limiting section is to provide a space for the spring to transmit the spring force to the base to press the base tightly against the countertop.
6. The invention provides a device for quickly mounting and quickly detaching a faucet on the countertop, the spring can greatly increase the friction between the abutting piece and the countertop surface during mounting, and is convenient for mounting, and also has the following effects: during mounting, because the spring can lift the bolt and the abutting piece to the abutting piece abutting the lower surface of the countertop, even if the height of the limiting pin is low, there is no need to measure the depth of the countertop basin first, and the abutting piece is screwed to a certain height on the thread section in advance, so that the anti-revolving pin and the inner part of the countertop basin can contact at least partially, so that the mounting can be continued, which makes the mounting more convenient. The spring also makes the structure have good adaptability to the mounting conditions of different basin depths, and does not need to manufacture thread sections of different lengths and limiting pins of different heights for different basin depths, thus improving the application extensiveness of the structure.

### Drawings

Fig. 1 is a three-dimensional decomposition diagram of the quickly mounting and quickly detaching device in the preferred embodiment of the present invention.
Fig. 2 is a stereogram of the quickly mounting and quickly detaching device placed in the mounting hole in the preferred embodiment of the present invention.
Fig. 3 is the cross-sectional view of the quickly mounting and quickly detaching device placed in the mounting hole in the preferred embodiment of the present invention.
Fig. 4 is the top view of the quickly mounting and quickly detaching device placed in the mounting hole in the preferred embodiment of the present invention.
Fig. 5 is a stereogram of the quickly mounting and quickly detaching device locked in the preferred embodiment of the present invention.
Fig. 6 is a cross-sectional view of the quickly mounting and quickly detaching device locked in the preferred embodiment of the present invention.
Fig. 7 is the top view of the quickly mounting and quickly detaching device locked in the preferred embodiment of the present invention.
Fig. 8-11 is the mounting step diagram of the quickly mounting and quickly detaching device in the preferred embodiment of the present invention.
Fig. 12-14 is a detaching step diagram of the quickly mounting and quickly detaching device in the preferred embodiment of the present invention.

### Detailed description

The present invention is further described below by means of drawings and specific embodiments.

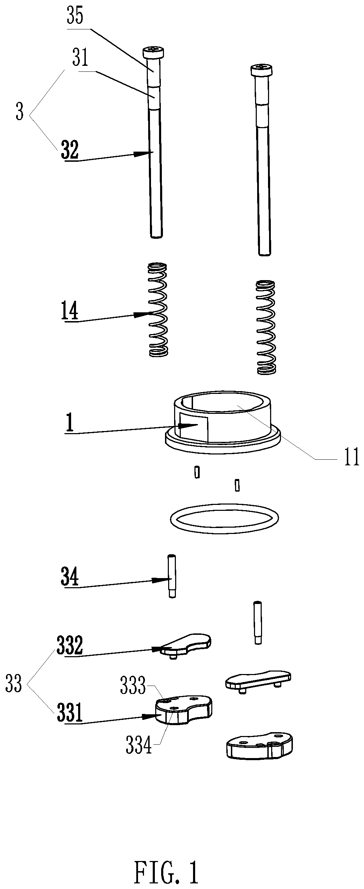

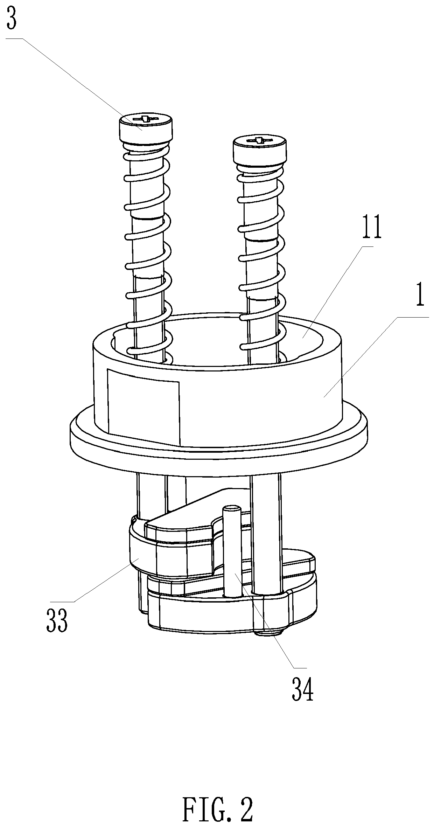

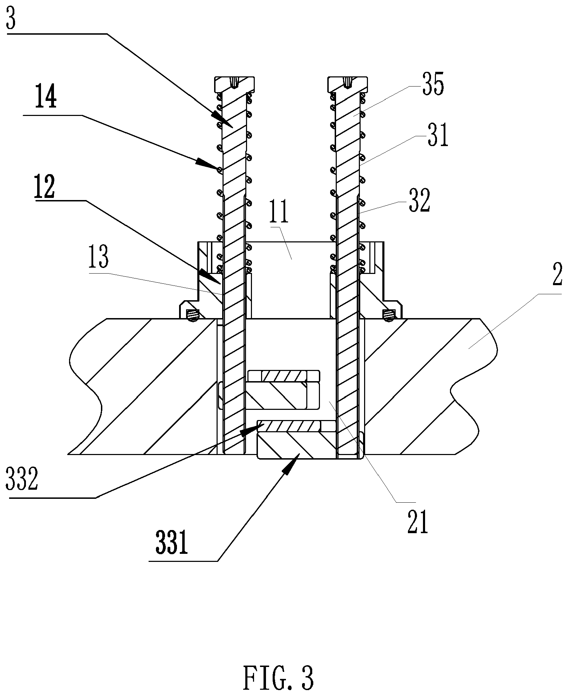

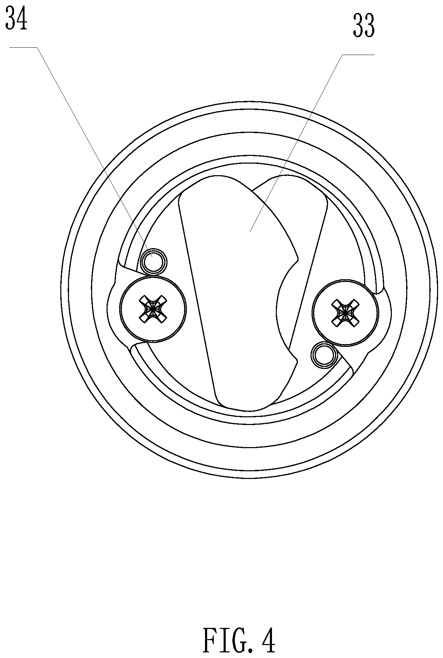

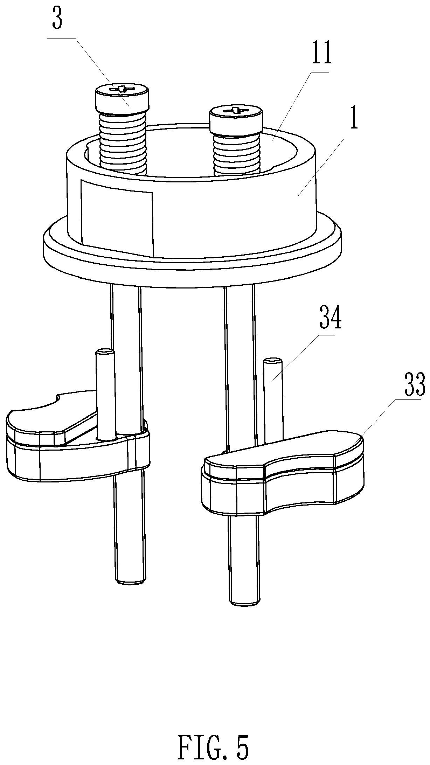

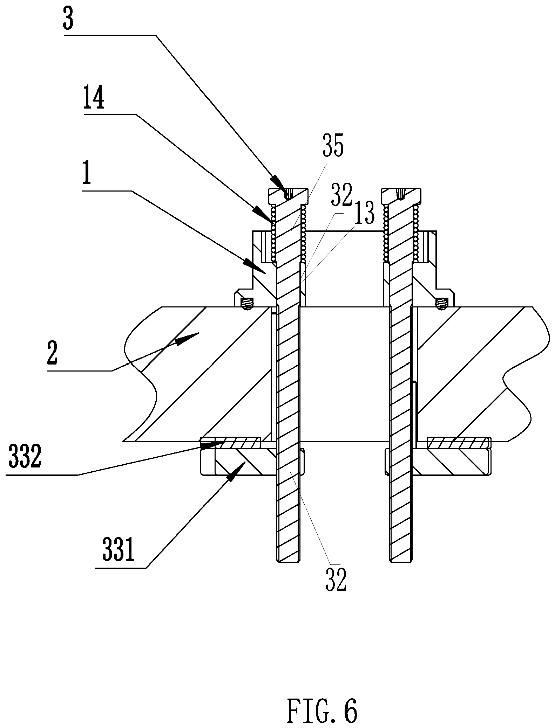

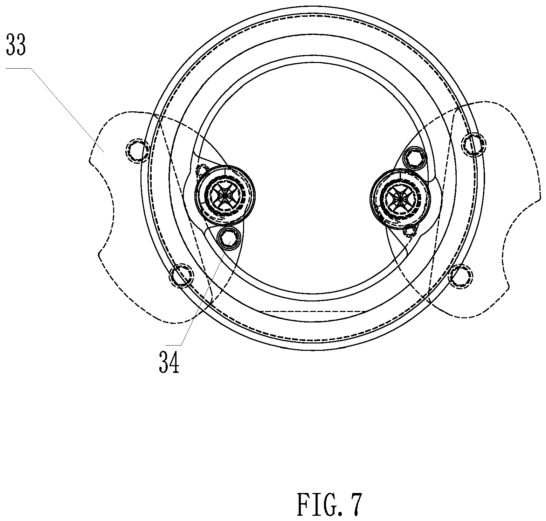

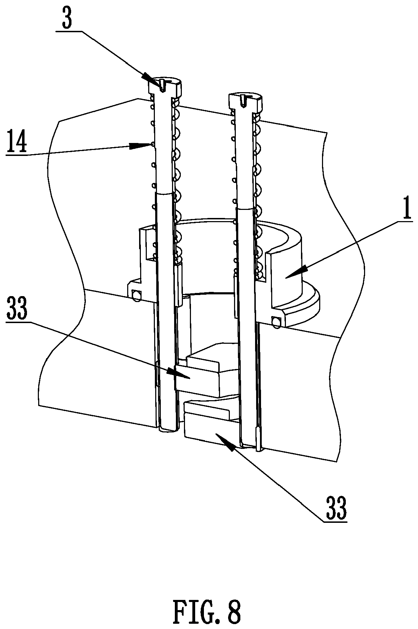

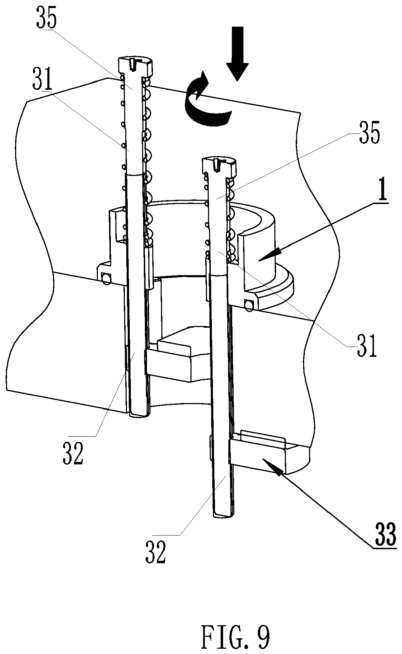

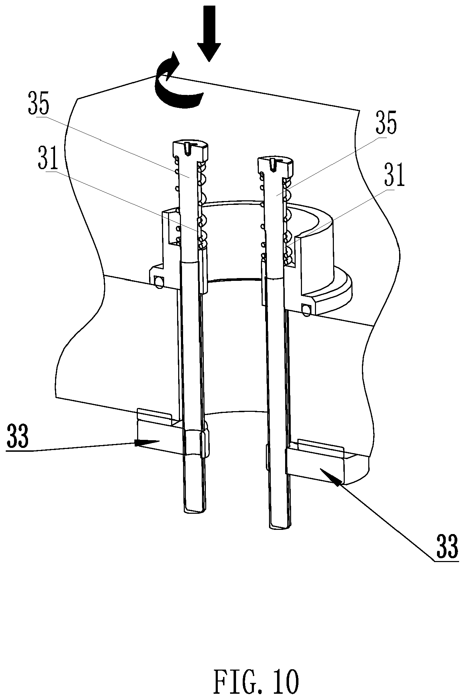

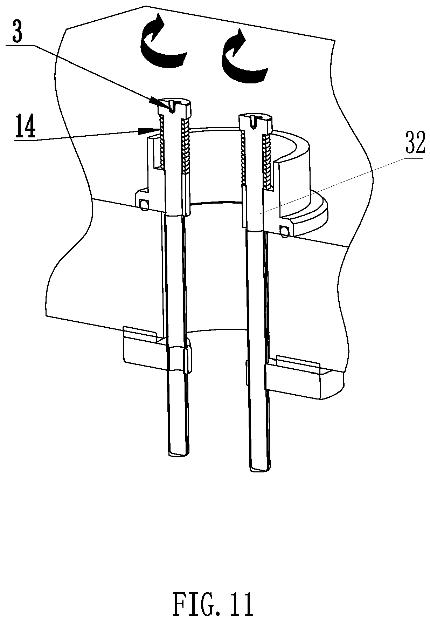

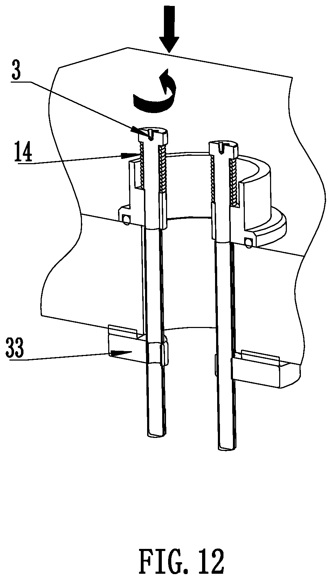

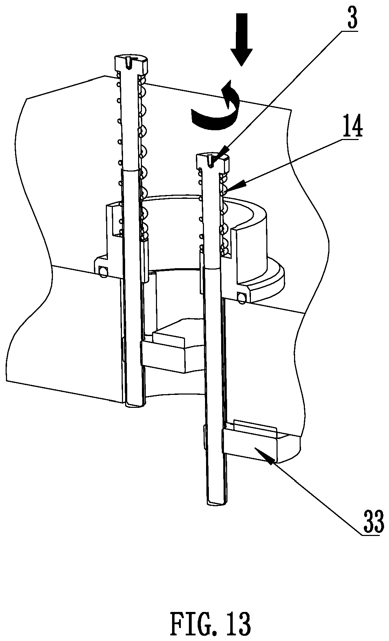

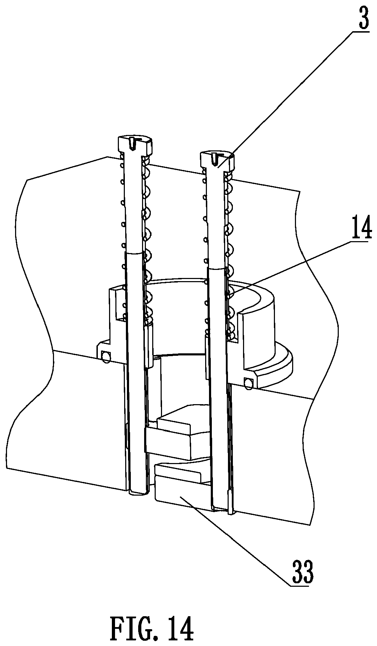

Referring to figs. 1-14, a device for quickly mounting and quickly detaching a faucet on the countertop, comprising:
a base 1, which is disposed on the upper surface of the countertop 2, and is provided with a hole 11 communicated to the mounting hole 21 of the countertop;
a pressing rod, in this embodiment, it is preferably a step bolt 3. It is provided with a threaded section 32, a guide section 31 and a limiting section 35. The diameter of the threaded section 32 is smaller than that of the guide section 31 , and the diameter of the guide section 31 is smaller than that of limiting section 35. The side wall of the hole 11 extends a boss 12 into the hole 11. The boss 12 has a receiving hole along the length direction of the hole 11. In this embodiment, the receiving hole is a screw hole 13. One end of the step bolt 3 is inserted into the screw hole 13 and extends into the mounting hole 21. The other end of the step bolt 3 is exposed outside the hole 11. The elastic reset piece is provided with between the other end of the step bolt 3 and the screw hole 13, preferably, it is a spring 14.

The end of the step bolt 3 extending to the mounting hole 21 is provided with a abutting piece 33 and a limiting piece 34 which can rotate coaxially with the step bolt 3.

When the end of the step bolt 3 exposing to outside the hole 11 is subjected an external force, the step bolt 3 moves from the first position to the second position along the length direction of the hole 11, and the spring 14 is compressed under the force. When the step bolt 3 is located in the second position, the abutting piece 33 moves outside the mounting hole 21, and the limiting piece 34 is located inside the mounting hole 21. When the step bolt 3 is rotated and the abutting piece 33 is rotated to below the lower surface of the countertop 2, the limiting piece 34 is abutting against the inner wall top of the mounting hole 21. When the external force is withdrawn, the spring 14 drives the step bolt upward, so that the abutting piece 33 is abutting against the lower surface of the countertop 2. Since the spring 14 is still in a compressive state at this time, the abutting piece 33 is tightly abutting against the lower surface of the countertop 2 under the elastic reset force of the spring 14.

When the step bolt 3 is located in the first position, the thread section 32 is located in the hole 13, the guide section 31 and the limiting section 35 are located outside the hole 13, and the inner diameter of the screw hole 13 is larger than the diameter of the thread section 32 and the guide section 31. When the step bolt 3 is subjected to external force, the thread section 32 and the guide section 31 can move downward along the length direction of the screw hole 13, while the abutting piece 33 moves downward in the hole 11. When the step bolt 3 is located in the second position, the guide section 31 is located in the screw hole 13, and the lower end surface of the limiting section 35 is abutting against the upper end surface of the screw hole 13. At this time, the abutting piece 33 is separated from the hole 11 and moves synchronously with the bolt 3 to abut against the lower surface of the countertop 2, and continues to twist the step bolt 3 clockwise along the locking direction, due to the limitation effect of the limiting piece 34, the abutting piece 33 cannot rotate accordingly. The thread section 32 of step bolt 3 and the screw hole 13 are tightly matched and locked. Therefore, the spring 14 and the abutting piece 33 provide an upward abutting force to the lower surface of the countertop 2. On the other hand, through the step bolt 3 and screw hole 13 exerting downward force on the upper surface of the countertop 2, the base 1 is firmly fixed at the mounting hole 21, and will not be offset after long-term use, with high reliability.

In this way, the whole mounting process is completed. It can be seen that the installer operates above the countertop 2 all the way. The operation space is very large, and there is no need to work in the narrow space under the countertop. The mounting difficulty is very low and the mounting is very convenient.

The detaching process is contrary to the above steps. The user rotates the step bolt 3 counterclockwise in the release direction, so that the spring 14 can be compressed again. At this time, the downward pressure is applied to the bolt 3 and the spring 14 is compressed. At the same time, the step bolt 3 is rotated counterclockwise in the release direction. Because the limiting piece 33 is only one-way limited along the clockwise direction, the limiting piece 34 and the abutting piece 33 will rotate to the lower part of the mounting hole 21 along with the step bolt 3. Under the elastic reset force of spring 14, the abutting piece 33 will return to the mounting hole 21. After that, as long as the step bolt 3 is released, the whole process of detaching can be completed. The detaching can be done only on the top of the countertop, which is also very simple.

In addition, the device requires few components, which minimizes the occupancy of space in the mounting hole 21. The space in the mounting hole 21 is enough to put down three water pipes with a diameter of 10 mm and an independent channel pipe with an outer diameter of 18 mm for the smooth passage of the drawing pipe. All functions of the faucet can be used normally.

The abutting piece 33 comprises a pressing plate 331 and a cushion pad 332. The pressing plate 331 has a through hole 333, and the thread section 32 of the step bolt 3 passes through the through hole 333 and are connected to the pressing plate 331. The through hole 333 is a threaded hole, and the step bolt 3 is bolted to the pressing plate 331. The upper surface of the pressing plate 331 is provided with a socket 334, and the cushion pad 332 has a corresponding plunger. The function of cushion pad 332 is that when the external force contacts, the resetting force of spring 14 drives the pressing plate 331 to move upward and to abut against the lower surface of countertop 2, the force is larger, and the cushion pad 332 can buffer the force, which can avoid the damage of the pressing plate 331 and countertop 2 due to the hard locking.

The limiting piece 34 is a limiting pin extending upward on the upper surface of the pressing plate 331. The limiting pin is arranged beside the through hole 333.

In this embodiment, the step bolts 3 are two, which are symmetrically arranged along the axis of the hole 11. One end of each step bolt 3 is provided with the pressing plate 331 respectively.

When the two step bolts 3 are located in the first position, the pressing plate 331 which connecting the two step bolts are stacked at different heights. The purpose of staggered placement is to ensure that the pressing plate 331 has a large enough area, when the pressing plate 331 abuts agains the lower surface of the countertop 2, the contact surface is relatively large and the stability and reliability are relatively high. The positions of the front end of the pressing plate 331 and the cushion pad 332 toward the limiting pin of the other pressing plate 331 respectively are provided with a receiving groove. In this way, the pressing plate 331 will not interfere with the limiting pin of another pressing plate 331 when it moves in the hole 11 and rotates after it leaves the hole.

The present invention is not limited to the specific embodiments described above. The above-mentioned embodiments should not be regarded as limiting the scope of the present invention. Technicians in the art may modify and change while reading and understanding the aforementioned detailed description.

### industrial applicability

The invention relates to a device for quickly mounting and quickly detaching a faucet on the countertop. All mounting steps are completed above the countertop surface, and the mounting personnel need not operate in a narrow space below the countertop surface. The mounting process is very simple, convenient, the range of application is wide, the industrial practicability is good.

## Claims

1. A device for quickly mounting and quickly detaching a faucet on the countertop, wherein comprising:
a base, which is disposed on the upper surface of the countertop, and is provided with a hole communicated to the mounting hole of the countertop;
a pressing rod, the side wall of the hole extends a boss into the hole, and the boss has a receiving hole along the length direction of the hole; one end of the pressing rod is inserted into the receiving hole and extended into the mounting hole, and the other end of the pressing rod is exposed outside the hole;an elastic reset piece is provided between the other end of the pressing rod and the receiving hole;
the end of the pressing rod extending to the mounting hole is provided with an abutting piece and a limiting piece which can rotate coaxially with the pressing rod;
when the end of the pressing rod exposed to the outside of the hole is subjected to an external force, the pressing rod moves from the first position to the second position along the length direction of the hole; when the pressing rod is located in the second position, the abutting piece moves to outside the mounting hole, and the limiting piece is located in the mounting hole; the pressing rod is rotated, when the abutting piece rotates to below the lower surface of the countertop, the limiting piece abuts against the inner wall of the mounting hole; when the external force is withdrawn, the elastic reset piece drives the pressing rod to move up, so that the abutting piece abuts against the lower surface of the countertop.

2. The device for quickly mounting and quickly detaching a faucet on the countertop according to claim 1, wherein: the pressing rod is a step bolt; it is provided with a thread section, a guide section and a limiting section, the diameter of the thread section is smaller than the diameter of the guide section, and the diameter of the guide section is smaller than the diameter of the limiting limiting section.

3. The device for quickly mounting and quickly detaching a faucet on the countertop according to claim 2, wherein: the receiving hole is a screw hole, when the step bolt is located in the first position, the thread section is at least partially located in the screw hole, the limiting section is located outside the screw hole, and the inner diameter of the screw hole is larger than the diameter of the thread section and the guide section; when the step bolt is located in the second position, the guide section is at least partially located in the screw hole.

4. The device for quickly mounting and quickly detaching a faucet on the countertop according to claim 3, wherein: after the abutting piece abuts against the lower surface of the countertop, the step bolt is rotated so that the step bolt and the screw hole are locked, and the upper surface of the base and the countertop is tightened.

5. The device for quickly mounting and quickly detaching a faucet on the countertop according to claim 4, wherein: the abutting piece includes a pressing plate and a cushion pad; the pressing plate is provided with a through hole which the thread section of the step bolt passes through the through hole and is connected with the pressing plate; the upper surface of the pressing plate is provided with a socket, and the cushion pad is provided with a corresponding plunger.

6. The device for quickly mounting and quickly detaching a faucet on the countertop according to claim 5, wherein: the limiting piece is a limiting pin extending upward on the upper surface of the pressing plate.

7. The device for quickly mounting and quickly detaching a faucet on the countertop according to claim 6, wherein: the limiting pin is arranged next to the through hole.

8. The device for quickly mounting and quickly detaching a faucet on the countertop according to claim 7, wherein: the step bolts are two, which are symmetrically arranged along the axis of the hole; one end of each step bolt is provided with the pressing plate respectively.

9. The device for quickly mounting and quickly detaching a faucet on the countertop according to claim 8, wherein: when the two step bolts are located in the first position, the pressing plates which connected to the two step bolts are in a state of stacking at different heights; the positions of the front end of the pressing plate and the cushion pad toward the limiting pin of the other pressing plate respectively are provided with a receiving groove.

10. The device for quickly mounting and quickly detaching a faucet on the countertop according to claim 9, wherein: the elastic reset piece is a spring.

11. The device for quickly mounting and quickly detaching a faucet on the countertop according to claim 9, wherein: the through hole is a threaded hole, and the step bolt is screwed with the pressing plate.

12. The device for quickly mounting and quickly detaching a faucet on the countertop according to claim 11, wherein: when the step bolt is located in the first position, the thread section is located in the screw hole, the guide section and the limiting section are located outside the screw hole, and the inner diameter of the screw hole is larger than the diameter of the thread section and the guide section, so that when the step bolt is subjected to external force, the thread section and the guide section can move downward along the length direction of the screw hole, while the abutting piece moves downward in the hole.

13. The device for quickly mounting and quickly detaching a faucet on the countertop according to claim 13, wherein: when the step bolt is located in the second position, the guide section is located in the screw hole, and the lower end surface of the limiting section abuts against the upper end surface of the screw hole; at this time, the abutting piece is separated from the hole, and synchronously moves with the bolt to abut against the lower surface of the countertop, and the step bolt is continued to be turned clockwise along the locking direction, due to the limiting of the limiting piece, the abutting piece cannot rotate with it; the thread section of the step bolt and the screw hole are tightly matched and locked.
